# DEMANDE DE BREVET EUROPEEN

(11) **EP 1 063 499 A1**
(43) Date de publication de la demande: **27.12.2000**
(21) Numéro de dépôt: 00401713.3
(22) Date de dépôt: 16.06.2000
(51) Int. Cl.: G01G 19/02, G01G 21/23

(54) **Pont de pesage de véhicules**

(30) Priorité: 25.06.1999 FR 9908136
(71) Demandeur: NS Testut SAS, 92400 Bethune (FR)
(72) Inventeur: Mairot, Guy, 74100 Vetras-Monthoux (FR); Mille, Jacques, 62113 Sailly-Labourse (FR)
(74) Mandataire: Robert, Jean-Pierre

(57) **Abrégé**

Pont de pesage de véhicules, comprenant au moins un module de tablier (1, 2) qui comporte deux structures métalliques (6, 7) d'appui sur des capteurs de poids et au moins deux longerons (4) en béton ayant des extrémités (5) fixées aux structures d'appui et une surface longitudinale supérieure (8) formant une piste de roulement pour les véhicules, chaque longeron ayant une partie longitudinalement précontrainte (10) s'étendant d'un côté d'une fibre neutre (9) du longeron opposée à la piste de roulement.

## Description

La présente invention concerne un pont de pesage de véhicules, notamment les véhicules de transport de marchandises tels que les camions ou les wagons ferroviaires.

De manière classique, les ponts de pesage comprennent généralement un tablier qui possède une surface supérieure formant une piste de roulement pour les véhicules et qui est destiné à reposer sur un radier par l'intermédiaire de capteurs de poids raccordés à un système électronique de traitement et d'affichage du poids mesuré.

On connaît des ponts de pesage comprenant une armature métallique qui est réalisée à partir de profilés longitudinaux fixés les uns aux autres par l'intermédiaire de profilés transversaux et qui est équipée d'un ferraillage. L'armature ainsi réalisée est enrobée de béton pour former le tablier du pont de pesage. Sous l'effet du vieillissement et/ou des charges supportées, il existe un risque que survienne une décohésion entre l'armature métallique et l'enrobage en béton favorisant un affaissement du tablier. L'obtention d'une cohésion durable entre l'armature métallique et l'enrobage en béton rend la fabrication des ponts de pesage de ce type particulièrement délicate à maîtriser.

On connaît également des ponts de pesage d'un autre type comprenant une armature à base de poutrelles métalliques qui est formée de deux cadres reliés par leurs extrémités de manière à s'étendre parallèlement l'un à l'autre. Dans chaque cadre s'étend un ferraillage métallique noyé dans du béton. Le pont de pesage ainsi réalisé est particulièrement résistant. Cependant, ce pont de pesage a une structure dont la fabrication est relativement coûteuse en main d'oeuvre et en composants.

Il existe donc un besoin non satisfait de manière commode à ce jour d'un pont de pesage ayant une structure résistante, simple à réaliser et peu coûteuse.

A cet effet, on prévoit, selon l'invention, un pont de pesage de véhicules, comprenant au moins un module de tablier qui comporte deux structures métalliques d'appui sur des capteurs de poids et au moins deux longerons en béton ayant des extrémités fixées aux structures d'appui et une surface longitudinale supérieure formant une piste de roulement pour les véhicules, chaque longeron ayant une partie longitudinalement précontrainte s'étendant d'un côté d'une fibre neutre du longeron opposée à la piste de roulement.

Ainsi, les longerons en béton précontraint confèrent au module de tablier sa résistance et sa rigidité. L'assemblage de ces longerons et des structures d'appui est simple et relativement peu coûteux. En outre, certaines poutres en béton précontraint forment des produits standards disponibles à des prix relativement peu élevés qui peuvent être utilisés pour réaliser les longerons. Le coût de fabrication du module de tablier peut de la sorte encore être réduit.

De préférence, au moins une des structures d'appui comprend une poutre s'étendant transversalement par rapport aux longerons, des chaises s'étendant en saillie latérale de la poutre pour recevoir les extrémités des longerons, et au moins une semelle solidaire de la poutre pour reposer sur un des capteurs de poids. Cet agencement permet d'obtenir une fixation rigide et résistante des longerons aux structures d'appui tout en étant simple.

Selon une caractéristique particulière de l'invention, le pont de pesage comprenant au moins un premier et un deuxième modules de tablier, une structure d'appui de chacun des premier et deuxième modules de tablier forme une structure d'accouplement à l'autre des premier et deuxième modules de tablier, chaque structure d'accouplement comprenant au moins une partie de fixation présentant une surface de butée s'étendant de façon sensiblement perpendiculaire à une direction longitudinale des longerons d'un côté de la poutre opposée aux longerons pour venir en contact de l'autre structure d'accouplement, la structure d'accouplement du premier module de tablier comprenant au moins une semelle solidaire de la poutre pour reposer sur un des capteurs de poids et la structure d'accouplement du deuxième module de tablier comprenant au moins un bras solidaire de la poutre d'un côté opposé aux longerons pour reposer sur la structure d'accouplement du premier module de tablier.

Ainsi, les structures d'accouplement assurent l'attelage des modules de tablier entre eux ainsi que la reprise et la transmission à au moins un capteur de poids d'une partie des efforts appliqués par la charge sur les deux modules de tablier. Ceci permet notamment d'obtenir un tablier rigide et de limiter le nombre des capteurs de poids.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue partielle en perspective d'un pont de pesage conforme à l'invention comprenant deux modules de tablier,
- la figure 2 est une vue analogue à la figure 1 d'un des modules de tablier,
- la figure 3 est une vue en perspective d'une structure d'appui d'un des modules de tablier,
- la figure 4 est une vue partielle en perspective d'un des longerons,
- les figures 5 et 6 sont des vues partielles en élévation de deux structures d'appui destinées à être accouplées l'une à l'autre,
- la figure 7 est une vue partielle en élévation de ces structures d'appui une fois accouplées.

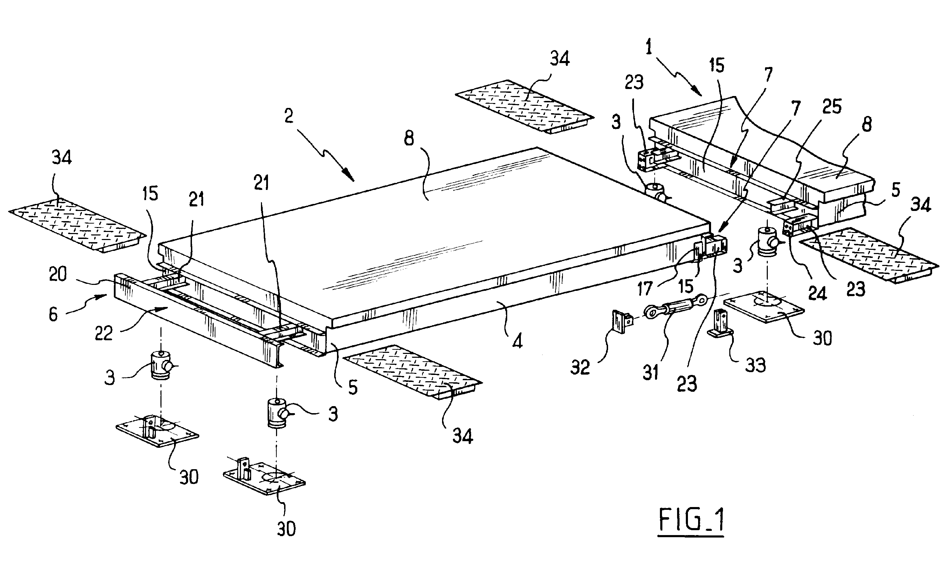

En référence à la figure 1, le pont de pesage conforme à l'invention comprend deux modules de tablier généralement désignés en 1 et 2 reliés par deux de leurs extrémités pour s'étendre dans le prolongement l'un de l'autre. Le tablier ainsi formé est destiné à reposer sur un radier par l'intermédiaire de capteurs de poids 3 de type connu disposés sur des plaques de fixation 30.

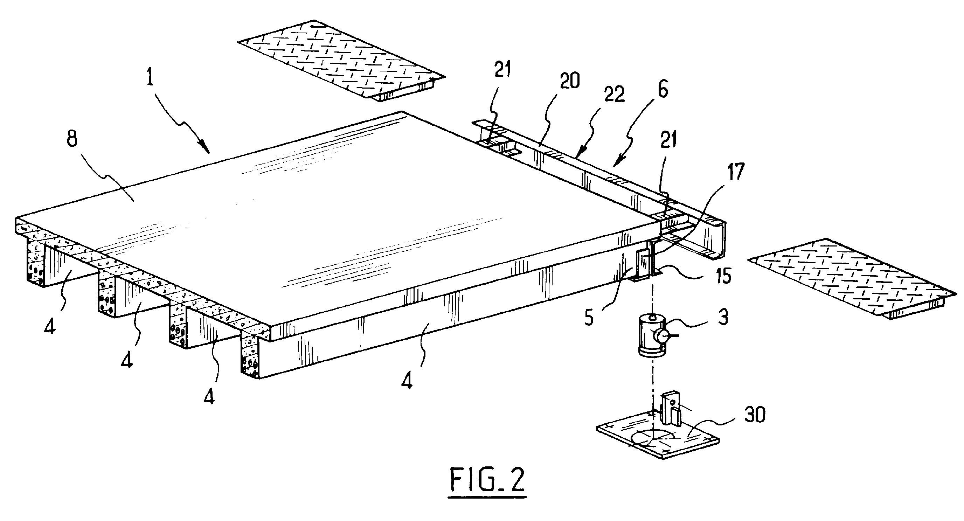

En référence également à la figure 2, chaque module de tablier 1, 2 comprend des longerons 4 parallèles ayant des extrémités 5 fixées à des structures d'appui généralement désignées en 6, 7 et un plateau 8 s'étendant sur les longerons 4.

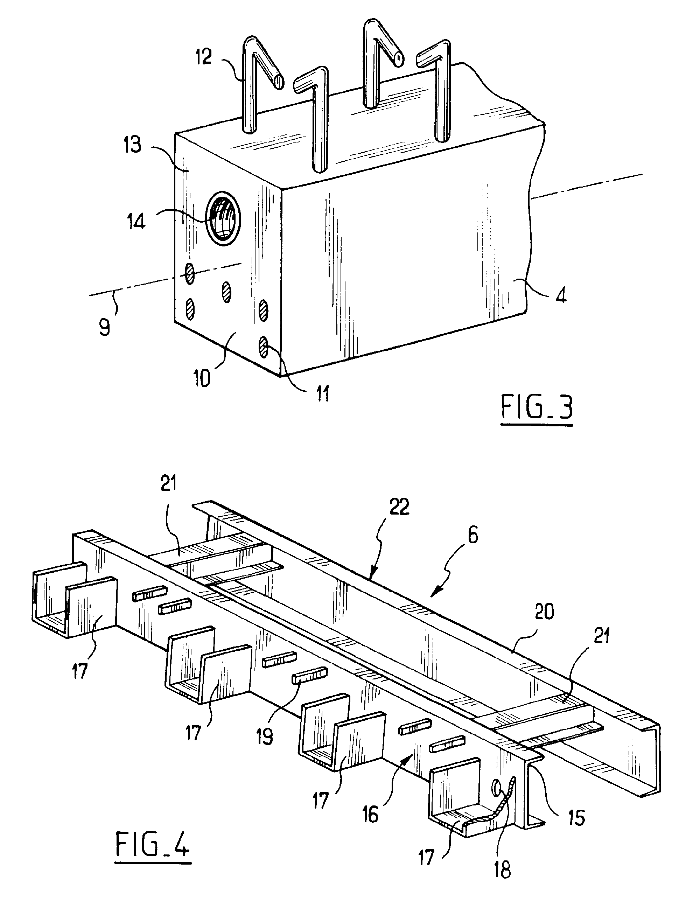

En référence à la figure 3, chaque longeron 4, ici de section transversale sensiblement rectangulaire, est réalisé en béton armé et comprend d'un côté de sa fibre neutre 9 une partie 10 longitudinalement précontrainte par l'intermédiaire de câbles métalliques 11 en tension noyés de façon connue dans le béton. La partie 10 est ici la partie longitudinale inférieure du longeron 4. Des éléments 12 du ferraillage noyé dans la masse du béton constituant le longeron 4 s'étendent en saillie de la partie longitudinale supérieure 13 du longeron opposée à la partie précontrainte 10 de celui-ci.

Dans chaque extrémité 5 des longerons 4 s'étend longitudinalement un insert taraudé 14 métallique.

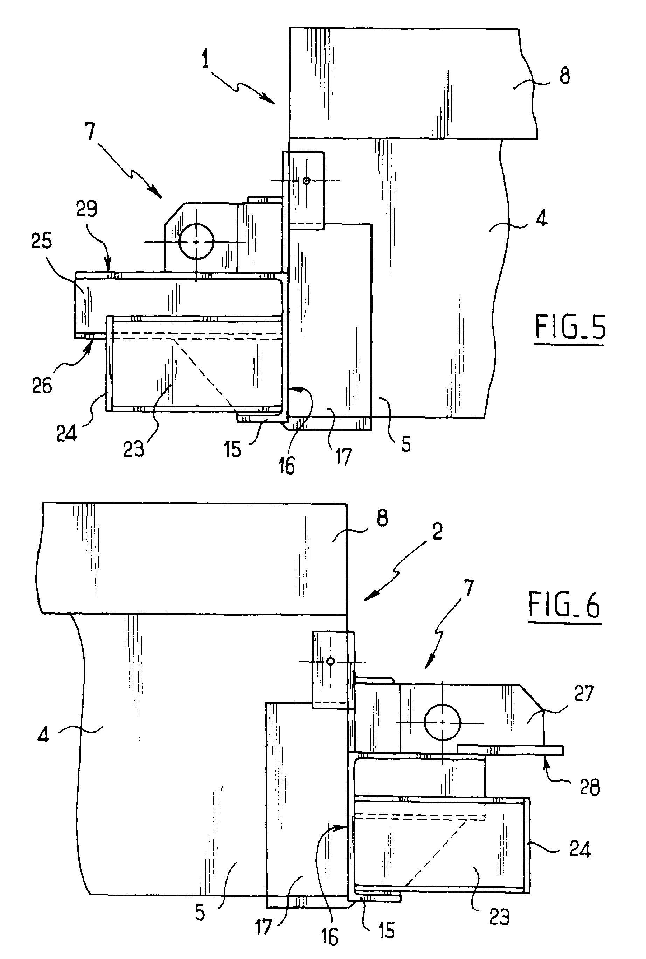

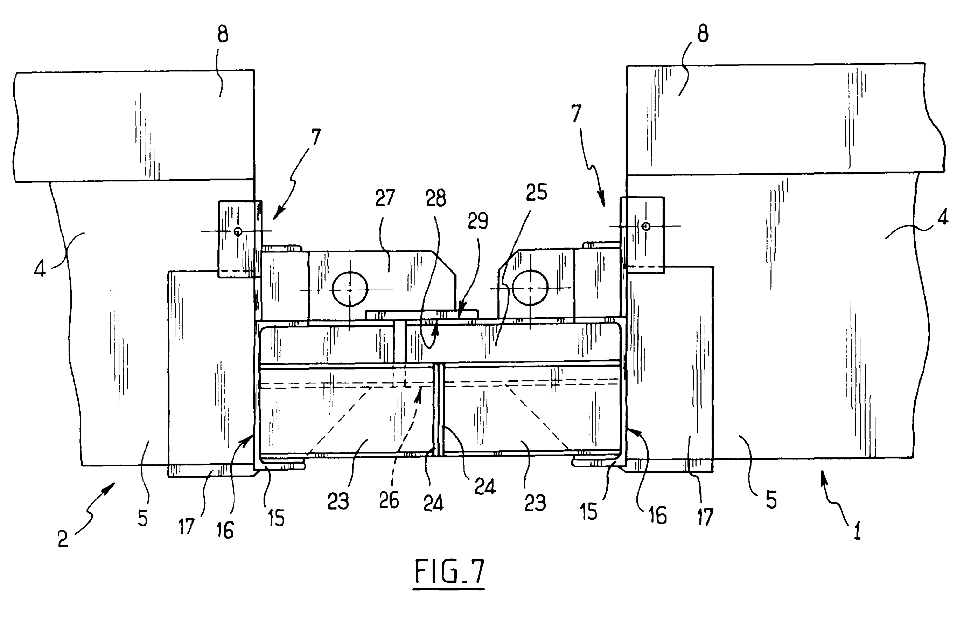

En référence également aux figures 4 à 7, chaque structure d'appui 6, 7 est réalisée à partir d'un assemblage mécano-soudé d'éléments métalliques, par exemple en acier. Chaque structure d'appui 6, 7 comprend une poutrelle 15 ayant une surface longitudinale 16 en saillie de laquelle s'étendent des chaises 17 pour recevoir les extrémités 5 des longerons 4. Des perçages 18 traversant la poutrelle 15 débouchent sur la surface longitudinale 16 de la poutrelle 15 au niveau des chaises 17. Chaque structure 6, 7 comprend également des ferraillages 19 s'étendant en saillie de la surface longitudinale 16 de la poutrelle 15.

Chaque structure d'appui 6 comprend en outre une deuxième poutrelle 20 parallèle à la poutrelle 15 et maintenue espacée de celle-ci par des entretoises 21 s'étendant d'un côté de la poutrelle 15 opposé à la surface longitudinale 16. La poutrelle 20 présente une surface longitudinale de butée 22 s'étendant à l'opposé de la surface longitudinale 16 de la poutrelle 15.

Chaque structure d'appui 7 comprend en outre deux parties de fixation 23 s'étendant en saillie de la poutrelle 15 d'un côté opposé aux chaises 17 pour coopérer avec les parties de fixation 23 de l'autre structure d'appui 7. Chaque partie de fixation 23 présente une plaque de butée 24 sensiblement normale à la direction longitudinale des longerons 4.

La structure d'appui 7 du module de tablier 1 comporte deux bras 25 s'étendant en saillie de la poutrelle 15 du côté des parties de fixation 23 et ayant chacun une surface inférieure 26 agencée pour reposer sur un capteur de poids 3.

La structure d'appui 7 du module de tablier 2 comporte deux bras 27 s'étendant en saillie de la poutrelle 15 du côté des parties de fixation 23 et ayant chacun une surface inférieure 28 agencée pour reposer sur une surface supérieure 29 des bras 25.

Pour réaliser chaque module de tablier 1, 2 on fabrique en premier lieu les structures d'appui 6, 7 et les longerons 4 (les longerons 4 sont par exemple issus d'une poutre précontrainte de grande longueur divisée en tronçons). Puis, on dispose dans un moule les structures d'appui 6, 7 et les longerons 4 dont les extrémités 5 sont reçues dans les chaises 17 des structures d'appui 6, 7 et sont fixées à celles-ci par des vis de fixation engagées par les perçages 18 dans les inserts taraudés 14. Un ferraillage est mis en place sur la partie supérieure 13 des longerons 4 et est fixé ou non avec le ferraillage 19 des structures d'appui 6, 7 et avec le ferraillage 12 des longerons 4. Du béton est ensuite coulé dans le moule pour former le plateau 8 de manière que, de préférence, le plateau 8 soit légèrement arqué dans une direction opposée aux longerons 4. Les ferraillages 12 et 19 sont alors pris dans la masse de béton et renforcent la solidarisation du plateau avec ceux-ci et les structures d'appui.

On notera que les longerons 4 sont disposés de manière que la partie précontrainte 10 s'étende à l'opposé du plateau 8 par rapport à la fibre neutre 9. Ainsi, lorsque le module de tablier est en charge, la partie 13 de chaque longeron 4 s'étendant au-dessus de la fibre neutre 9 est soumise à une contrainte de compression due à la charge supportée par le plateau 8 et la partie 10 s'étendant en dessous de la fibre neutre 9 est soumise à une contrainte de compression correspondant à la différence entre la contrainte de compression exercée par les câbles 11 et la contrainte de traction exercée par la charge. Les longerons 4 travaillent donc en permanence en compression, contrainte à laquelle ils sont le plus résistants. En outre, cet agencement présente l'avantage que la contrainte de compression exercée par les câbles 11 augmente au cours du temps de sorte qu'au cours de son vieillissement le module de tablier conserve une résistance importante et ne s'affaisse pas ou peu. De plus, la forme arquée du plateau 8 permet de limiter la flèche du module de tablier lorsque celui-ci est en charge.

Le plateau présentera avantageusement des reliefs sur sa surface supérieure pour lui conférer un état de surface rugueux améliorant l'adhérence des véhicule et aura ses arêtes longitudinales chanfreinées pour limiter les risques d'ébréchure de celles-ci.

Préalablement à la coulée du béton, on pourra appliquer sur le moule un produit facilitant le démoulage.

Par ailleurs, une résine favorisant l'adhérence et/ou une résine d'étanchéité pourra être appliquée sur les zones de jonction entre les parties métalliques et les parties en béton et sur les zones de jonction entre les longerons 4 et le plateau 8.

L'installation sur le site nécessite la réalisation préalable d'un radier. Le radier peut être réalisé dans une fosse dont la profondeur est déterminée de manière que la surface supérieure du plateau affleure la surface du sol ou il peut être réalisé en surface, deux rampes devant alors être aménagées au voisinage des extrémités du pont de pesage pour permettre aux véhicules de monter sur le pont de pesage et d'en descendre.

Après la réalisation du radier, les modules de tablier 1, 2 sont disposés sur des cales servant de gabarit pour positionner et fixer les plaques de fixation 30 des six capteurs de poids 3 utilisés ici. Les modules de tablier 1, 2 sont ensuite soulevés pour permettre la mise en place des plaques de fixation 30 et les capteurs de poids 3, puis les modules de tablier 1, 2 sont déposés sur ceux-ci. Les modules de tablier pourraient également être montés directement sur les capteurs de poids 3, ce qui permettrait d'éliminer l'étape de positionnement sur cales et simplifierait l'installation du pont de pesage. La mise en place des modules de tablier est réalisée en disposant d'abord le module de tablier 1 sur quatre capteurs de poids 3 (le module de tablier 1 repose sur les capteurs de poids 3 par les structures d'appui 6 et 7) puis en déposant le module de tablier 2 de manière que sa structure d'appui 6 repose sur deux capteurs de poids 3 et sa structure d'appui 7 repose par ses bras 27 sur la surface supérieure 29 des bras 25 de la structure d'appui 7 du module de tablier 1. De préférence, les bras 27 sont en appui sur les bras 25 à l'aplomb des capteurs de poids 3 sur lesquels les surfaces inférieures 26 des bras 25 reposent.

Les modules de tablier sont fixés l'un à l'autre par l'intermédiaire de boulons s'étendant dans des perçages traversant les plaques de butée 24 des structures d'appui 7 et maintenant en contact lesdites plaques de butée.

L'immobilisation du pont de pesage par rapport au radier selon une direction longitudinale du pont est assurée par des tirants 31 s'étendant parallèlement à cette direction et ayant des extrémités à rotule reliées pour l'une à une chape 32 fixée sur la structure d'appui 7 d'un des modules de tablier et pour l'autre à une chape 33 fixée sur une plaque de fixation 30 adjacente. Ainsi, lorsqu'un véhicule frêne sur le pont de pesage, le pont ne risque pas de glisser et provoquer une détérioration des capteurs de poids ou d'osciller et fausser la mesure. Ceci est encore plus utile lorsque le camion à peser comporte une citerne remplie de liquide risquant d'amplifier de telles oscillations. En outre les surfaces longitudinales de butée 11 améliorent encore le maintien en position du pont en coopérant avec les bords de la fosse ou des rampes en cas d'effort dans la direction longitudinale. On notera qu'en condition normale il existe un jeu entre les surfaces de butée 22 et les bords des fosses ou des rampes pour éviter de fausser les mesures de poids du fait d'un contact entre ceux-ci. L'utilisation de tirants pourvus de rotules limitant les frottements vise au même but.

Les capteurs de poids sont ensuite reliés à un boîtier de raccordement non représenté destiné à transmettre un signal numérique correspondant au poids mesuré par les capteurs à un indicateur du poids mesuré lui-même non représenté.

Des plaques métalliques 34 sont disposées sur les structures d'appui 6, 7 pour affleurer la surface supérieure du plateau 8 et offrir une piste de roulement continue.

La constitution modulaire du pont de pesage présente plusieurs avantages. Ainsi, à titre d'exemple, en prévoyant des modules de sept mètres ou de neuf mètres, on obtient une gamme de ponts comprenant des ponts à un module mesurant sept mètres ou neuf mètres et des ponts à deux modules mesurant quatorze mètres, seize mètres ou dix huit mètres. Un pont de pesage à deux modules ou plus peut en outre être stocké et transporté démonté, les modules de tablier étant empilés pour limiter l'encombrement. Enfin, l'installation du pont de pesage nécessite une grue dont la capacité de levage est limitée au poids du module le plus lourd.

Bien entendu, l'invention n'est pas limitée au mode de réalisation décrit et on peut y apporter des variantes de réalisation sans sortir du cadre de l'invention tel que défini par les revendications.

En particulier, bien que le pont de pesage ait été représenté composé de deux modules de tablier, le pont de pesage peut ne comporter qu'un module de tablier qui comprend alors deux structures d'appui 6 ou en comporter au moins trois, le ou les modules de tablier centraux comprenant alors deux structures d'appui 7.

On peut également réaliser des modules de tabliers comprenant des longerons et un plateau en une seule pièce, ou ne comprenant que deux longerons ayant une surface supérieure formant directement la piste de roulement pour les véhicules, des plaques métalliques étant éventuellement disposées entre les longerons pour combler l'espace existant entre ceux-ci.

## Revendications

1. Pont de pesage de véhicules, caractérisé en ce qu'il comprend au moins un module de tablier (1, 2) qui comporte deux structures métalliques (6, 7) d'appui sur des capteurs de poids et au moins deux longerons (4) en béton ayant des extrémités (5) fixées aux structures d'appui et une surface longitudinale supérieure (8) formant une piste de roulement pour les véhicules, chaque longeron ayant une partie longitudinalement précontrainte (10) s'étendant d'un côté d'une fibre neutre (9) du longeron opposée à la piste de roulement.

2. Pont de pesage selon la revendication 1, caractérisé en ce qu'au moins une des structures d'appui (6, 7) comprend une poutre (15) s'étendant transversalement par rapport aux longerons (4), des chaises (17) s'étendant en saillie latérale de la poutre (15) pour recevoir les extrémités (5) des longerons, et au moins une semelle solidaire de la poutre pour reposer sur un des capteurs de poids.

3. Pont de pesage selon la revendication 2, caractérisé en ce que, le pont de pesage comprenant au moins un premier et un deuxième modules de tablier (1, 2), une structure d'appui (7) de chacun des premier et deuxième modules de tablier forme une structure d'accouplement à l'autre des premier et deuxième modules de tablier, chaque structure d'accouplement comprenant au moins une partie de fixation (22) présentant une surface de butée (24) s'étendant de façon sensiblement perpendiculaire à une direction longitudinale des longerons d'un côté de la poutre (15) opposée aux longerons (4) pour venir en contact de l'autre structure d'accouplement, la structure d'accouplement (7) du premier module de tablier (1) comprenant au moins une semelle (26) solidaire de la poutre pour reposer sur un des capteurs de poids et la structure d'accouplement (7) du deuxième module de tablier (2) comprenant au moins une semelle (28) solidaire de la poutre pour reposer sur la structure d'accouplement du premier module de tablier.

4. Pont de pesage selon l'une quelconque des revendications 1 à 3, caractérisé en ce qu'au moins une des structures d'appui (7) comprend un moyen (31) d'immobilisation longitudinale du module de tablier correspondant (2) par rapport à un support sur lequel il est posé.

5. Pont de pesage selon la revendication 4, caractérisé en ce que le moyen d'immobilisation comprend un tirant (31) ayant des extrémités pourvues de rotules de fixation à la structure d'appui concernée (7) et au support pour s'étendre selon une direction longitudinale du pont de pesage.

6. Pont de pesage selon l'une quelconque des revendications précédentes, caractérisé en ce que les extrémités (5) des longerons (4) comprennent des inserts taraudés (14) dans lesquels sont engagées des vis de fixation aux structures d'appui (6, 7).

7. Pont de pesage selon l'une quelconque des revendications précédentes, caractérisé en ce que chaque module de tablier (1, 2) comprend un plateau en béton (8) s'étendant sur les longerons (4) pour en constituer la surface longitudinale supérieure.

8. Pont de pesage selon l'une quelconque des revendications précédentes, caractérisé en ce que chaque module de tablier (1, 2) est arqué vers une direction prévue des efforts exercés par les véhicules sur la piste de roulement.
